(19) Europäisches Patentamt
European Patent Office
Office européen des brevets

(11) **EP 1 985 477 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(51) Int Cl.:
***B60G 17/015*** (2006.01)

(21) Anmeldenummer: **08153086.7**

(22) Anmeldetag: **20.03.2008**

(54) **Verfahren zum Betrieb eines verstellbaren Fahrwerks**

Method for operating an adjustable suspension

Procédé de fonctionnement d'un châssis réglable

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.04.2007 DE 102007019380**

(43) Veröffentlichungstag der Anmeldung:
**29.10.2008 Patentblatt 2008/44**

(73) Patentinhaber: **ZF Friedrichshafen AG**
**88038 Friedrichshafen (DE)**

(72) Erfinder:
• **Hees, Eberhard**
**97505 Geldersheim (DE)**
• **Bartelmus, Andreas**
**97453 Schonungen (DE)**
• **Kissner, Stefan**
**97618 Hohenroth (DE)**
• **Maul, Rainer**
**96160 Geiselwind (DE)**

(56) Entgegenhaltungen:
| EP-A- 0 539 063 | EP-B- 0 027 869 |
| EP-B- 0 197 316 | DE-A1- 3 738 048 |
| DE-A1- 3 918 735 | US-A- 5 346 242 |
| US-A- 5 384 706 | US-A- 5 999 868 |
| US-A- 6 049 746 | |

## Beschreibung

Die Erfindung betrifft ein Verfahren zum Betrieb eines verstellbaren Fahrwerks gemäß dem Oberbegriff von Patentanspruch 1.

Aus "Kraftfahrzeugstoßdämpfer", Verlag Moderne Industrie, Band 185; 1999; wird auf den Seiten 62 und 63 kurz auf Regelstrategien im Bereich der elektronisch geregelten Schwingungsdämpfer eingegangen. Darin wird festgestellt, dass Beschleunigungssensoren die wirtschaftlichste Variante für die Detektion von Fahrwerksparametern darstellen. Ersatzweise wird die Verwendung von Wegsensoren angeregt, wenn diese bereits für andere Fahrzeugsysteme zur Verfügung stehen.

Aus der Theorie Mathematik kann man die Signale beider Sensorbauarten durch Integration- oder Differentiation derartig aufbereiten, dass man Weg-; Geschwindigkeit- oder Beschleunigungssignale erhält, die zur weiteren Verarbeitung in einem größeren Fahrwerkssystem zur Verfügung stehen.

In der Praxis hat sich jedoch gezeigt, dass diese Lehrmeinung nicht uneingeschränkt gilt. Insbesondere sehr kleine hochfrequente Wegsignale sind tendenziell fehlerbehaftet und führen zu einem sehr "verrauschten", d. h. mit sehr vielen Pieks behafteten Ausgangssignal, das in dieser Qualität nicht verwertbar ist.

Die EP 0 027 869 B1 beschreibt ein Verfahren zum Betreiben eines verstellbaren Fahrwerks. Dabei werden die Bewegung des Fahrzeugaufbaus zu einem achsseitigen Bauteil und die Bewegung des Fahrzeuaubaus sensiert und als Stellsignale verwendet. Die Stellsignale werden mittels eines Korrekturwerts erhöht, wenn eine schwingende Masse eine Endlage erreicht.

Aufgabe der vorliegenden Erfindung ist es, auch bei kleinen Anregungen einer Fahrzeugachse mit Hilfe eines Wegsensors eine gute Signalqualität für den Betrieb des verstellbaren Fahrwerks zur Verfügung zu stellen.

Erfindungsgemäß wird die Aufgabe durch die Merkmale des Patentanspruchs 1 gelöst.

Insbesondere bei unzureichenden Signalen betreffend die Sensierung der Bewegung des achsseitigen Bauteils zum Fahrzeugaufbau kann dieser Anteil bei der Berechnung des Ausgangssignals vermindert werden. Auf der anderen Seite besteht die Möglichkeit bei einem besonders gut verwertbaren Signal den Anteil zu erhöhen und den Anteil des Signals betreffend die Fahrzeugaufbaubewegung zu reduzieren.

Anhand der folgenden Figurenbeschreibung soll die Erfindung näher erläutert werden.

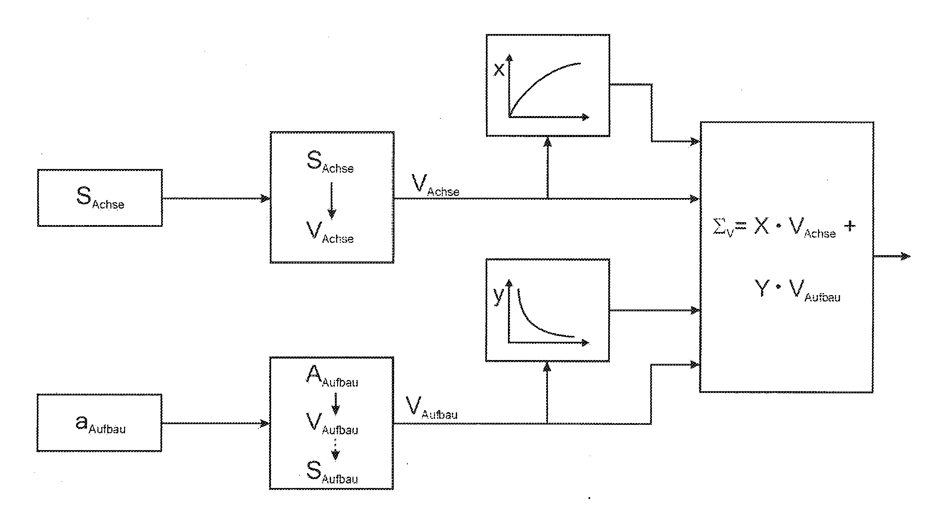

Die einzige Figur zeigt ein Blockschaltbild der Erfindung. Von mindestens einem Wegsensor funktional zwischen einem Fahrzeugrad/einer Fahrzeugachse und einem Fahrzeugaufbau wird ein die Rad/Achsbewegung repräsentierendes Signal, nämlich das Wegsignal $S_{Achse}$ bereitgestellt. Derselbe Wegsensor kann z. B. auch für eine Fahrzeugniveauregelung verwendet werden. Aus dem Wegsignal wird durch ein Differenzierelement ein Geschwindigkeitssignal $V_{Achse}$ ermittelt. Das Geschwindigkeitssignal $V_{Achse}$ wird in ein Berechnungselement eingespeist, das z. B. ein Stellsignal für einen elektrisch verstellbaren Schwingungsdämpfer oder eine verstellbare Federeinrichtung ermittelt.

Zeitlich parallel dazu getaktet wird von mindestens einem weiteren Sensor, z. B. einem Beschleunigungssensor, ein die Fahrzeugaufbaubewegung repräsentierendes zweites Signal als Ausgangssignal $A_{Aufbau}$ detektiert. Ggf. kann das Beschleunigungssignal in seine Richtungskomponenten zerlegt werden, um z. B. nur die Vertikalbewegung des Fahrzeugaufbaus zu berücksichtigen. Aus dem Ausgangssignal $A_{Aufbau}$ wird in einem Integrierelement ein Geschwindigkeitssignal $V_{Aufbau}$ und ggf. ein Wegsignal $S_{Aufbau}$ erzeugt. Auch das Geschwindigkeitssignal $V_{Aufbau}$ wird dem Berechnungselement zugeführt. Man könnte auch jeweils die Wegsignale der Achse/des Rades und des Fahrzeugaufbaus verwenden, doch bei dieser Wahl der beiden Signale erfolgt jeweils nur eine einstufige Signalumformung, wodurch der damit verbundene Fehler minimiert wird.

In dem Berechnungselement wird durch Addition beider Signale $V_{Achse}$ und $V_{Aufbau}$ das besagte Stellsignal bestimmt. Zumindest eines der beiden Eingangssignale $V_{Achse}$ oder $V_{Aufbau}$ wird in Verbindung mit einem Gewichtungsfaktor X verwendet.

Das Signal $V_{Achse}$ wird einem Korrekturelement zugeführt. Anhand einer Kennlinie wird dem Eingangswert $V_{Achse}$ der Gewichtungsfaktor X zugeordnet. Die Kennlinie kann z. B. durch Fahrversuche oder Simulation ermittelt worden sein. Diese aus Stützpunkten festgelegte Kennlinie führt zu einer von Betragssprüngen freien Bemessung des Gewichtungsfaktors X. Man könnte sicherlich auch das Signal $S_{Achse}$ direkt verwenden, doch hat man mit dem Signal $V_{Achse}$ ein Maß, das unabhängig ist von dem absoluten Betrag des Wegsignals $S_{Achse}$. Tendenziell gilt, dass bei einem kleinen Eingangswert $V_{Achse}$ auch ein kleiner Gewichtungsfaktor X, z. B. 0,2; verwendet wird. Folglich steigt der Einfluss der Fahrzeugaufbaubewegung an der Bestimmung des Stellsignals.

Optional kann auch für den Fahrzeugaufbau ebenfalls ein Gewichtungsfaktor Y verwendet werden. Entsprechend kann z. B. mit Signal $V_{Aufbau}$ in einem zweiten Korrekturelement anhand einer gegenläufigen Kennlinie der Gewichtungsfaktor Y bestimmt werden.

Das Stellsignal $\Sigma_V$ des Berechnungselements folgt der Gleichung:

$$\Sigma_V = X \cdot V_{Achse} + Y \cdot V_{Aufbau}$$

Mit dem Gewichtungsfaktor X und/oder Y werden die Signale $V_{Achse}$ und $V_{Aufbau}$ bedämpft, so dass die aus dem Stand der Technik bekannten Signal-Pieks geglättet sind. Fahrversuche haben gezeigt, dass trotz des Verzichts der bisher verwendeten Beschleunigungssensoren an den Räder/Achsen ein vergleichbares Fahrverhalten des Fahrzeugs erreicht werden konnte, wie bei einem Fahrzeug, das zusätzliche die Rad/Achsbeschleunigung erfassende Sensoren aufweist.

Wird beispielsweise nur für eine Achse eine Federweg-Sensierung vorgenommen, dann kann dieses Signal $S_{Achse}$ für ein Rad einer anderen Achse verwendet werden.

## Patentansprüche

1. Verfahren zum Betreiben eines verstellbaren Fahrwerks, umfassend mindestens einen Wegsensor zur Detektion einer Bewegung zwischen einem Fahrzeugaufbau und einem achsseitigen Bauteil und mindestens ein die Bewegung des Fahrzeugaufbaus detektierenden Sensor, wobei die Ausgangssignale der besagten Sensoren ein Stellsignal für ein verstellbares Aggregat des Fahrwerks bestimmen, indem das die Bewegung zwischen dem Fahrzeugaufbau und dem achsseitigen Bauteil repräsentierende Signal $V_{Achse}$ und das die Bewegung des Fahrzeugaufbaus repräsentierende Signal $V_{Aufbau}$ als Eingangssignale einem Berechnungselement zugeführt werden, wobei zumindest das die Bewegung zwischen dem Fahrzeugaufbau und dem achsseitigen Bauteil repräsentierende Signal $V_{Achse}$ in Abhängigkeit der besagten Bewegung mit einem Korrekturfaktor X versehen wird,.

**dadurch gekennzeichnet,**

**dass** die Eingangssignale $V_{Achse}$ und $V_{Aufbau}$ Geschwindigkeitssignale sind und dass der Korrekturfaktor X von der Größe des Eingangssignals $V_{Achse}$ bestimmt wird, wobei eine kleineres Signal $V_{Achse}$ zu einem kleineren Korrekturfaktor X führt und damit der Anteil des die Bewegung des Fahrzeugaufbaus repräsentierenden Signals $V_{Aufbau}$ am Stellsignal für das verstellbare Aggregat steigt.

## Claims

1. Method for operating an adjustable chassis, comprising at least one travel sensor for detecting a movement between a vehicle body and an axle-side component and at least one sensor which detects the movement of the vehicle body, wherein the output signals of said sensors determine an actuation signal for an adjustable assembly of the chassis, in that the signal $V_{axle}$ which represents the movement between the vehicle body and the axle-side component and the signal $V_{body}$ which represents the movement of the vehicle body are fed as input signals to a calculation element, wherein at least the signal $V_{axle}$ which represents the movement between the vehicle body and the axle-side component is provided with a correction factor X as a function of said movement,

**characterized**

**in that** the input signals $V_{axle}$ and $V_{body}$ are speed signals, and in that the correction factor X is determined by the magnitude of the input signal $V_{axle}$, wherein a relatively small signal $V_{axle}$ gives rise to a relatively small correction factor X and therefore the portion of the actuation signal for the adjustable assembly composed of the movement of the signal $V_{body}$ which represents the vehicle body increases.

## Revendications

1. Procédé de conduite d'un train de roulement ajustable, qui comprend au moins un capteur de déplacement qui détecte un déplacement entre le châssis d'un véhicule et un composant de l'essieu et au moins un capteur qui détecte un déplacement du châssis du véhicule, les signaux de sortie desdits capteurs définissant un signal de réglage d'un ensemble ajustable du train de roulement par le fait que le signal $V_{Achse}$ qui représente le déplacement entre le châssis du véhicule et le composant de l'essieu et le signal $V_{Aufbau}$ qui représente le déplacement du châssis du véhicule sont apportés en tant que signaux d'entrée à un élément de calcul, le signal $V_{Achse}$ qui représente le déplacement entre le châssis du véhicule et le composant de l'essieu étant doté d'un facteur de correction X en fonction dudit déplacement,

**caractérisé en ce que**

les signaux d'entrée $V_{Achse}$ et $V_{Aufbau}$ sont des signaux de vitesse,

**en ce que** le facteur de correction X est déterminé à partir du niveau du signal d'entrée $V_{Achse}$ et

**en ce qu'**un signal $V_{Achse}$ petit entraîne un petit facteur de correction X, la fraction du signal $V_{Aufbau}$ qui représente le déplacement du châssis du véhicule augmentant ainsi dans le signal de réglage de l'ensemble ajustable.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0027869 B1

**In der Beschreibung aufgeführte Nicht-Patentliteratur**

- Kraftfahrzeugstoßdämpfer. Verlag Moderne Industrie, 1999, vol. 185, 62, 63